# EUROPEAN PATENT SPECIFICATION

(11) **EP 1 647 635 B1**
(45) Date of publication and mention of the grant of the patent: **30.11.2011**
(21) Application number: 05021721.5
(22) Date of filing: 05.10.2005
(51) Int. Cl.: E02F 9/12, B62D 25/00

(54) **Working machine with a special turntable frame structure**
Baumaschine mit einer speziellen Rahmenstruktur für den drehbaren Oberwagen
Engin de travaux publics muni d'une tourelle avec un cadre spécial

(30) Priority: 14.10.2004 GB 0422791
(43) Date of publication of application: 19.04.2006
(60) Divisional application: 11156490.2
(73) Proprietor: JCB Compact Products Limited, Rocester Staffordshire ST14 5JP (GB)
(72) Inventor: Brindle, Richard James, Yoxall, Burton-on-Trent DE13 8PL (GB)
(74) Representative: Jones, John Bryn

(56) References cited:
- EP-A- 1 306 490
- JP-A- 2001 342 646
- JP-A- 2002 097 666
- JP-A- 2003 020 683
- JP-A- 2003 082 705
- US-A- 1 773 252
- US-A- 2 513 726
- US-B1- 6 499 556

## Description

This invention relates to a working machine of the kind having an upper frame structure which is rotatably mounted with respect to a lower ground engaging structure which typically includes a pair of tracks.

The upper frame structure carries an engine and mounts a working ann such as an excavating arm, which an operator controls from within a cab of the machine. The engine typically is mounted at the rear of the upper frame structure and together with a counterweight, serves to balance the machine, or the engine may be side mounted.

It is known for such a machine to have an upper frame structure made as a monolithic casting with an integral counterweight at a rear end thereof. Various components, such as the engine, cooling pack and so on, are built into the frame structure on a production line. Although the frame structure is simple, it will be appreciated that assembly of the components can be hindered as assembly operatives have to work in restricted spaces, and particularly in the case of a small working machine, with which this invention is primarily but not exclusively concerned, it can be difficult for multiple assembly operatives concurrently to assemble components into the upper frame structure.

Alternatively it is known to fabricate the upper frame structure which provides more versatility of assembly, but this advantage is offset by the need to assemble a plurality of upper frame structure parts to provide the upper fame structure.

US1,773,252 discloses a working machine which includes an upper frame part which includes two cast frame parts. Components of the working machine are mounted on the cast frame parts.

EP1,306,490 discloses a working machine having a main cast frame part and side parts which are connected to the main cast frame part.

JP2003020683 discloses a monolithic cast upper frame part of a working machine which includes a mounting for a swinging working arm and an engine.

According to one aspect of the invention we provide a working machine according to claim 1.

Thus in accordance with the invention, the advantages of a single monolithic upper frame structure are realised i.e. simplicity, whilst machine components can be assembled with the respective upper frame structure parts separate, thus facilitating assembly.

In one example, the first frame part includes a rear part, and a pair of opposed forwardly extending side parts, the rear part having a mass such as to serve as a counterweight, whilst the side parts each provides a respective coupling formation, whilst the second frame part includes a front part, and a pair of rearwardly extending side parts, the front part providing a mounting for a working arm, whilst the side parts each provides a respective coupling formation which co-operate with a coupling formation of the forwardly extending side parts of the first frame part. In one example, each of the coupling formations of the first and second frame parts has one, but preferably a plurality of openings to receive fasteners whereby the coupling formations are connected together.

One of the coupling formations of one of the first and second frame parts may include a guide formation to guide the respective coupling formation to which it is to be coupled, during assembly, into a registry position with the other coupling formation.

The first and second frame parts when coupled together, may mount a cab floor, an operator's seat, a control lever assembly which is operatively connected to the control valve assembly, and a cab structure which may include a frame providing sides with at least one door opening, the sides being closeable with side panels, and may include a cab roof which may be closed with one or more roof panels.

The working arm may be mounted onto the second frame part prior to or subsequent to coupling the first and second frame parts together.

The first frame part may provide an opening in the rear part thereof which may be closed with a bonnet, so that access may be gained to components such as the engine, after the first and second frame parts have been coupled together.

According to a second aspect of the invention we provide a method of assembling an upper frame structure of a working machine, according to claim 6.

The method may include mounting and/or accommodating in or on the first frame part at least one, but preferably a plurality of, and possibly all of the following first frame part machine components prior to coupling of the first and second frame parts, namely:-
an engine cooling pack;
a hydraulic pump;
a hydraulic oil cooling pack;
a battery;
a fuel tank;
a hydraulic fluid tank.

The method may include mounting and/or accommodating in or on the second frame part at least one, but preferably a plurality of, and possibly all of the following components prior to coupling of the first and second frame parts, namely:-
a slew ring and slew motor by means of which the upper frame structure is rotatable relative to the lower ground engaging structure;
a hydraulic fluid control valve assembly by means of which an operator may in use control the machine;
a hydraulic linear actuator which when the working arm is mounted, is operable for swinging the working arm about a generally upright axis relative to the upper frame structure.

The method may include connecting the first and second frame parts by providing in the respective coupling formations openings, aligning the openings of the first frame part with openings of the second frame part, and inserting fasteners in the aligned openings.

The method may further include, subsequent to coupling the first and second frame parts together, providing a cab floor, an operator's seat, a control lever assembly which is operatively connected to the control valve assembly, and a cab structure which may include a frame providing sides with at least one door opening, the sides being closeable with side panels, and a cab roof which may be closed with one or more roof panels. The method may include making hydraulic and electrical connections between machine components of the first and second frame parts upon or subsequently to coupling the first and second frame parts.

The method may include mounting a working arm onto the second frame part prior to or subsequent to coupling the first and second frame parts together.

Embodiments of the invention will now be described with reference to the accompanying drawings in which:-
FIGURE 1 is a side view of a working machine assembled in accordance with the present invention;
FIGURE 2 is a more detailed perspective view of a part of the upper frame structure of the machine of figure 1, with machine components mounted;
FIGURE 3 is a more detailed perspective view of another part of the frame structure of the machine of figure 1 with machine components mounted;
FIGURE 4 is a more detailed view of assembled frame structure parts, with mounted components omitted for clarity.

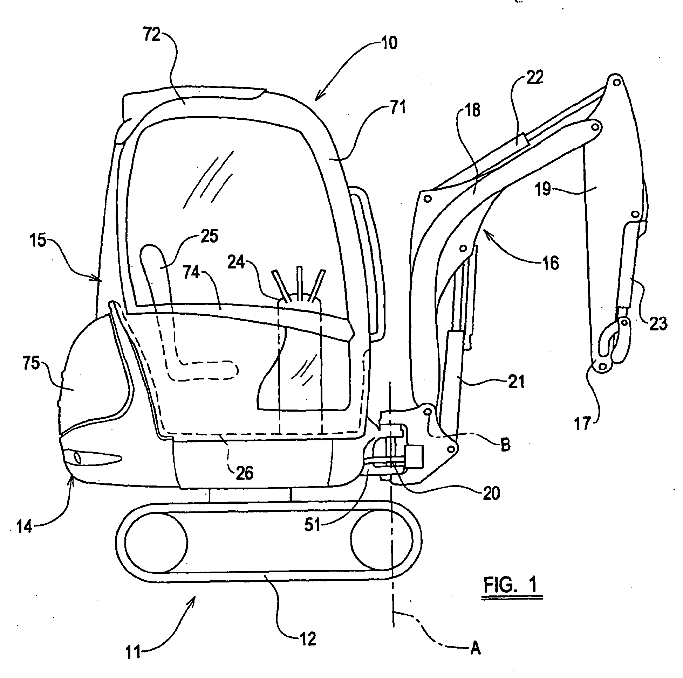

Referring to Figure 1 of the drawings there is shown a working machine 10 of the kind known as an excavator, the machine 10 including a ground engaging structure 11 which in this example includes a pair of tracks 12, driven by respective hydraulically powered track motors (not shown). Mounted for rotation on the ground engaging structure 11 is an upper frame structure 14 which as will be described below, includes two frame parts, the upper frame structure 14 mounting a cab structure 15, and a working arm 16 which is an excavating arm in this example, adapted to carry at an outermost end 17 thereof, a bucket (not shown) or other working implement.

The working arm 16 is mounted for swinging about a generally upright axis A, and for movement about a generally horizontal axis B, and the working arm 16 includes a boom part 18 from which depends a dipper arm 19, there being a first hydraulic actuator 20 (only partly seen in figure 1) for swinging the arm 16 about upright axis A, a second hydraulic actuator 21 for moving the arm 16 about horizontal axis B, a third hydraulic actuator 22 for moving the dipper arm 19 relative to the boom part 18, and a fourth hydraulic actuator 23 for moving the bucket when mounted, relative to the dipper arm 19.

The various hydraulic actuators 20-23, and the track motors for the tracks 12, are controlled by an operator from within the operator's cab structure 15, using controls of a hydraulic control lever assembly 24. The cab structure 15 also includes an operator's seat 25 mounted on a cab floor 26.

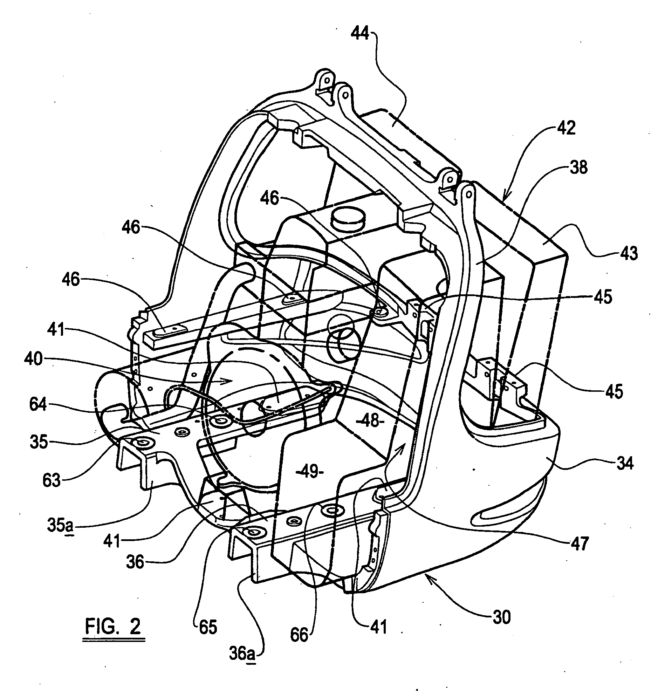

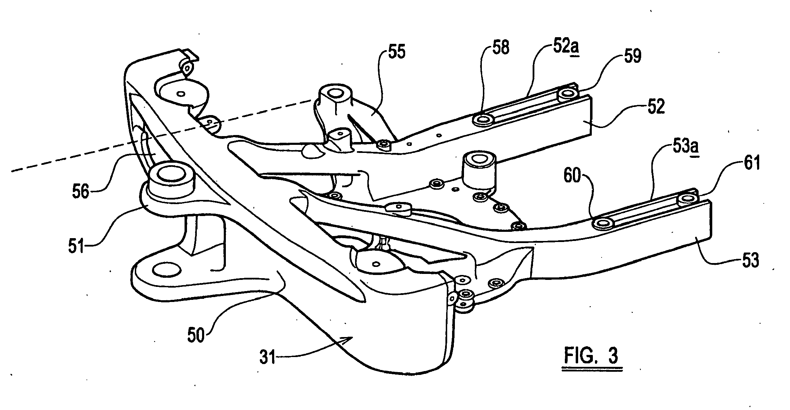

The upper frame structure 14 includes a first part 30 seen in figure 2, and a second part 31 seen in figure 3.

The first frame part 30 is in use at the rear of the upper frame structure 14 and includes a rear part 34, and two forwardly extending side parts 35, 36. Also in this example, the first frame part 30 includes a cab supporting structure 38 which extends upwardly from the rear part 34 and provides a framework for the rear of the cab structure 15. The first frame part 30 is in tins example, made as a monolithic casting and provides mounting points for various machine components which are assembled in the first frame part 30 prior to coupling the first and second frame parts 30, 31, as will now be described.

The machine 10 includes an engine 40 which is mounted by three engine mountings each indicated at 41, a cooling pack 42 which in this example includes both a radiator 43 for cooling engine cooling water and a radiator 44 for cooling hydraulic oil used for the various actuators 20-23 and the hydraulic motors, although in another example, separate water and hydraulic oil cooling packs could be provided. The cooling pack 42 is mounted by mountings 45 provided on the rear part 34 of the casting, behind the engine 40.

The first frame part 30 further includes three mountings 46 for a battery (not shown in position) to one side of the engine 40, and in a space 47 at an opposite side of the engine 40 to the battery, there are accommodated two tanks, namely a fuel tank 48, and a hydraulic fluid tank 49, one on top of the other.

At least the engine 40 is mounted in the first frame part 30 prior to coupling the first 30 and second frame parts 31, but preferably each of the other first frame part machine components indicated are mounted in or on or accommodated by the first frame part 30 prior to coupling the first and second frame parts 30, 31.

A hydraulic pump, driven by the engine to provide hydraulic pressure for the actuators 20-23 and track motors is also accommodated by the first frame part 30, and may be assembled into the first frame part 30 integrally with the engine 40 or subsequently.

Referring to figure 3, the second frame part 31 is shown. This too in this example, is a monolithic casting and includes a front part 50 which provides a mounting 51 for the working arm 16, and a pair of rearwardly extending side parts 52, 53 which provide between them, a slew ring mounting for mounting a slew ring motor by means of which the upper frame structure 14 is rotatable relative to the lower ground engaging structure 11.

The second frame part 31 further provides a mounting 55 for the first actuator 20 which is operative to swing the working arm 16 about the upright axis A, there being an opening 56 in the front part 50 to allow the first actuator 20 to pass through to connect to the working arm 16 as shown on dotted lines in figure 3.

The second frame part 31 further provides mountings (not readily seen in figure 3) for a hydraulic control valve assembly to which each of the actuators 20-23 of the working arm 16, and the track motors for the tracks 12, are connected in use by pipework, and to which the hydraulic control lever assembly 24 within the cab structure 15 is mechanically and/or electrically and/or hydraulically connected in use. The various second frame part machine components are assembled in or on, or are accommodated by the second frame part 31 prior to coupling the first and second frame parts 30, 31.

It can be seen that the rearwardly extending side parts 52, 53 of the second frame part 31 each has a generally rectangular cross section coupling formation 52a, 53a respectively, each coupling formation 52a, 53a having a pair of openings 58, 59 and 60, 61 provided therein. In figure 2, it can be seen that each of the forwardly extending side parts 35, 36 includes a respective inverted rectangular cross section channel portion 35a, 36a, which provides a coupling formation, each coupling formation 35a, 36a also having provided therein, in a base of the channel, a pair of openings 63, 64 and 65, 66.

A method of assembling the upper frame structure 14 and other components of the machine 10 will now be described.

As the first and second frame parts 30, 31 are monolithic castings, these are simply provided by single components, so that no assembly/fabrication of frame parts is initially required.

The various first frame part machine components, i.e. engine 40, cooling pack 42, battery, tanks 48, 49 may then be assembled in or on or accommodated by the first frame part 30. Separately but if desired simultaneously, the various second frame part machine components may be assembled in or on or accommodated by the second frame part 31.

Of course, each of the frame parts 30, 31 may include other machine components, including other hydraulic and other control valves, which may be provided prior to or subsequent to coupling the first and second frame parts 30, 31 together.

When the various machine components are thus assembled, the first and second frame parts 30, 31 may be coupled together.

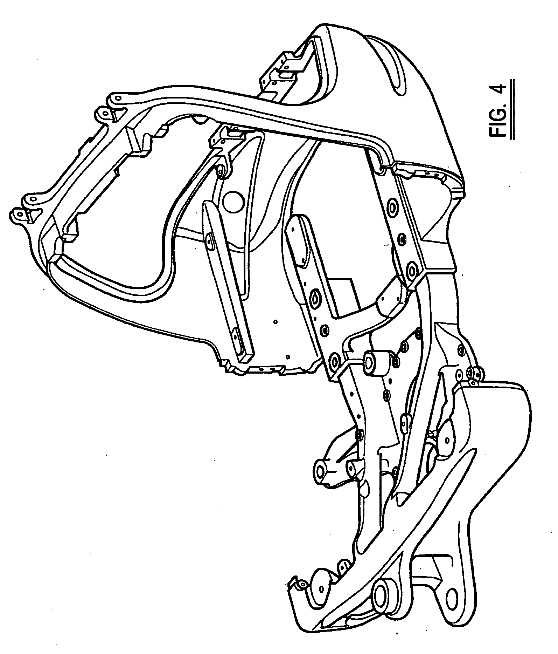

This may be achieved by relatively moving the frame parts 30, 31 towards one another so that the coupling formations 52, 53 of the second frame part 31 are guided into the channels 35a, 36a of the coupling formations 35, 36 of the first frame part 30, and continuing relatively to move the frame parts 30, 31 until in a registry position in which the openings 58-61 of the second frame part 31 are aligned with the respective openings 63-66 of the first frame part 30. The channels 35a, 36a or at least one of them, may include internal stops which are engaged by the coupling formations 52, 53 of the second frame part 31 when in the registry position, if desired. Figure 4 shows the frame parts 30, 31 in the registry position.

In each case, fasteners, such as bolts may be passed into aligned pairs of openings, i.e. 58 and 63, 59 and 64, 60 and 65, 61 and 66. When the fasteners are tightened, the first and second frame parts 30, 31 will be rigidly coupled together. If desired, the fasteners may be made permanent after tightening so that the coupling of the frame parts 30, 31 is permanent, or may be subsequently releasable to enable the frame parts 31, 31 to be separated during a repair or maintenance procedure, as desired. Of course the channels 35a, 36a or other guides could be provided by the coupling formations of the second frame part 31 if desired, or a guide may be provided on each of the frame parts 30, 31.

Instead of fasteners to couple the frame parts 30, 31, the frame parts 30, 31 may be coupled by other means, e.g. by welding the respective coupling formations together, although the use of fasteners is preferred.

By making the first and second frame parts 30, 31 as castings, it will be appreciated that this adds weight to the machine 10. Desirably, the rear part 34 of the first frame part 30 is of sufficient mass to provide a counterweight to the weight of the working arm 16 when attached and when working. The engine 40 and other first frame part machine components will additionally add counterweight as they are positioned rearwardly of me machine 10.

Subsequent to coupling the first and second frame parts 30, 31 together, assembly of the machine 10 may be completed by adding the cab floor 26, and inserting the seat 25, and control lever assembly 24, making hydraulic connections as necessary. As the hydraulic pump, hydraulic fluid cooler 44, and the hydraulic fluid tank 49 are located by the first frame part 30, it is envisaged that the only hydraulic connections which will need to be made between the machine components of first and second frame parts 30, 31 is a flow from the pump to the control valve assembly, and a return from the control valve assembly to tank 49.

A single multi-way electrical connector may provide for all electrical connections between the machine components of the first and second frame parts 30, 31 to be made if desired.

The cab structure 15 may be provided by a frame which provides at least cab sides 71 and a cab roof 72, at least one of the cab sides 71 affording a door opening for a cab door 74, whilst the cab sides are otherwise closed by one or more side panels, and the cab roof is closed by one or more roof panels as seen in figure 1.

A windscreen may close a front the cab frame, and one or more rear panels may close a cab rear afforded in this example by the cab supporting structure 38, although this may be afforded by the cab frame in another example.

In another example, the cab frame need not include a cab roof or even cab sides or a front, so that the cab merely provides an operator's control position, including a seat 25.

Various modifications may be made without departing from the scope of the invention.

For example, the front 30 and rear 31 frame part configurations shown are only exemplary and many design changes may be made as appropriate for mounting/accommodating the particular machine components for another machine 10 in accordance with the invention.

The working arm 16 may be mounted on the front frame part 31 prior to or subsequent to coupling the first and second frame parts 30, 31.

Although it is preferred for the upper frame structure 14 to be afforded by only first and second monolithic cast frame parts 30, 31, upper frame structures 14 including more than two frame parts are not precluded from the scope of the invention. In the example illustrated a bonnet 75 is assembled to the first frame part 30 to close an opening above the rear part 34 and behind the cooling pack 42, and to provide access to the engine 40 and other first frame part machine components, for maintenance purposes. However the first frame part 30 will always mount the engine 40 and the second frame part 31 the control valve assembly as a minimum, prior to coupling the first and second frame parts 30, 31 together.

In another example (not shown) the first and second frame parts 30, 31 need not be, respectively, rear and front frame parts, but two frame parts each being a side frame part may be provided, and coupled together by transversely moving together (relative to a longitudinal axis of the machine 10) the frame parts, and coupling them together. In this example and generally, coupling formations need not include forwardly or rearwardly facing parts, but inwardly sideways extending parts, by means of which the frame parts may be coupled, and preferably connected together by fasteners, welding or any other connecting method.

Where the upper frame structure includes first and second side parts, the first part may mount the engine at a side of the machine, and the second part, a hydraulic control valve assembly, with each frame part mounting other machine components as requested.

## Claims

1. A working machine (10) including an upper frame structure (14) rotatably mounted on a lower ground engaging structure (11) including ground engaging means (12) by which the machine is moveable (10) over the ground, the upper frame structure (14) including first and second monolithic casting frame parts (30, 31) each mounting machine components (40, 42, 48, 49), the first and second frame parts (30, 31) each including respective coupling formations (35 36; 52, 53) by means of which the first and second frame parts (30, 31) are coupled together, **characterised in that** the working machine (10) includes an engine (40) which is mounted and/or accommodated in or on the fist frame part (30), and the second frame part (31) provides a mounting (51) for a working ann (16) which permits the working arm (16) to swing about a generally upright axis (A).

2. A machine according to claim 1 **characterised in that** the first frame part (30) includes a rear part (34), and a pair of opposed forwardly extending side parts (35, 36), the rear part (34) having a mass such as to serve as a counterweight, whilst the side parts (35, 36) each provides a respective coupling formation.

3. A machine according to claim 1 or claim 2 **characterised in that** the second frame part (31) includes a front part (50), and a pair of rearwardly extending side parts (52, 53), the front part (50) providing the mounting (51) for the working arm (16), whilst the side parts (52, 53) each provides a respective coupling formation which co-operates with a coupling formation (35; 36) of a forwardly extending side part (35, 36) of the first frame part (30).

4. A machine according to any one of the preceding claims **characterised in that** one of the coupling formations (35, 36) of one of the first and second frame parts (30) includes a guide (35a, 35a) to guide the respective coupling formation (52, 53) to which it is to be coupled, during assembly, into a registry position with the other coupling formation (52, 53).

5. A machine according to any one of the preceding claims **characterised in that** the first and second frame parts (30, 31) when coupled together, mount a cab floor (26), an operator's seat (25), a control lever assembly (24) which is operatively connected to the control valve assembly, and a cab structure (15), the cab structure (15) including a frame providing sides (71) with at least one door opening, the sides (71) being closed by side panels, a cab roof (72) which is closed with one or more roof panels.

6. A method of assembling an upper frame structure (14) of a working machine (10), which upper frame structure (14) in use, is rotatably mounted on a lower ground engaging structure (11) including ground engaging means (12) by which the machine (10) is moveable over the ground, the method including providing a first monolithic casting frame part (30), and providing a second monolithic casting frame part (31), the first and second frame parts (30, 31) each including respective coupling formations (35, 36; 52, 53) by means of which the first and second frame parts are subsequently coupled together, the method further including mounting an engine 40 on the first frame part (30), and mounting a working arm (16) on the second frame part (31), such that the working ann (16) is permitted to swing about a generally upright axis (A) and subsequently coupling the first and second frame parts (30, 31) using the coupling formations. (32,36;52,53) to provide the upper frame structure (14).

7. A method according to claim 6 **characterised in that** the method includes mounting and/or accommodating in or on the first frame part (30) at least one of the following first frame part machine components prior to coupling of the first and second frame parts, namely:-
an engine cooling pack (42);
a hydraulic pump;
a hydraulic oil cooling pack (44);
a battery;
a fuel tank(48);
a hydraulic fluid tank (49);

8. A method according to claim 6 or claim 7 **characterised in that** the method includes mounting and/or accommodating in or on the second frame (31) part at least one of the following second frame part machine components prior to coupling of the first and second frame parts, namely:-
a slew ring and slew motor by means of which the upper frame structure is rotatable relative to the lower ground engaging structure;
a hydraulic fluid control valve assembly by means of which an operator may in use control the machine;
a hydraulic linear actuator which when the working arm is mounted, is operable for swinging the working arm about a generally upright axis relative to the upper frame structure.

9. A method according to any one of claims 6 to 8 **characterised in that** the method includes connecting the first and second frame parts (30, 31) by providing in the respective coupling formations (35, 36; 52, 53), openings, aligning the openings of the first frame part (30) with openings of the second frame part (31), and inserting fasteners in the aligned openings, and subsequent to coupling the first and second frame parts (30, 31) together, providing for the upper frame structure (14), a cab floor (26), an operator's seat (25), a control lever assembly (24) which is operatively connected to the control valve assembly, and a cab structure (15), the cab structure (15) including a frame providing sides (71) with at least one door opening, the sides (71) being closeable with side panels, and a cab roof (72) which is closeable with one or more roof panels.

10. A method according to any one of claims 6 to 9 **characterised in that** the method includes making hydraulic and electrical connections between machine components of the first and second frame parts (30, 31) upon or subsequently to coupling the first and second frame parts (30, 31).

## Patentansprüche

1. Arbeitsmaschine (10), enthaltend eine obere Rahmenstruktur (14), die drehbar auf einer unteren, mit dem Boden in Eingriff stehenden Struktur (11) montiert ist, die mit dem Boden in Eingriff stehende Mittel (12) enthält, durch welche die Maschine (10) über den Boden bewegbar ist, wobei die obere Rahmenstruktur (14) erste und zweite monolithische Gussrahmenteile (30, 31) enthält, die jeweils Maschinenkomponenten (40, 42, 48, 49) tragen, wobei das erste und zweite Rahmenteil (30, 31) jeweils entsprechende Verbindungsformationen (35, 36; 52, 53) enthalten, mittels derer das erste und zweite Rahmenteil (30, 31) miteinander verbunden werden, **dadurch gekennzeichnet, dass** die Arbeitsmaschine (10) einen Motor (40) enthält, der in oder auf dem ersten Rahmenteil (30) montiert und/oder untergebracht ist, und das zweite Rahmenteil (31) eine Halterung (51) für einen Arbeitsarm (16) bereitstellt, die es dem Arbeitsarm (16) ermöglicht, um eine im Allgemeinen aufrechte Achse (A) zu schwingen.

2. Maschine nach Anspruch 1, **dadurch gekennzeichnet**, das das erste Rahmenteil (30) einen hinteren Teil (34) und ein Paar gegenüberliegender, sich nach vorne erstreckender Seitenteile (35, 36) enthält, wobei der hintere Teil (34) eine solche Masse besitzt, dass es als Gegengewicht dient, während die Seitenteile (35, 36) jeweils eine entsprechende Verbindungsformation bereitstellen.

3. Maschine nach Anspruch 1 oder Anspruch 2, **dadurch gekennzeichnet**, das der zweite Rahmenteil (31) einen vorderen Teil (50) und ein Paar sich nach hinten erstreckender Seitenteile (52, 53) enthält, wobei das vordere Teil (50) die Halterung (51) für den Arbeitsarm (16) bereitstellt, während die Seitenteile (52, 53) jeweils eine entsprechende Verbindungsformation bereitstellen, die mit einer Verbindungsformation (35, 36) eines sich nach vorne erstreckenden Seitenteils (35, 36) des ersten Rahmenteils (30) zusammenwirkt.

4. Maschine nach einem der vorherigen Ansprüche, **dadurch gekennzeichnet, dass** eine der Verbindungsformationen (35, 36) des ersten oder zweiten Rahmenteils (30) eine Führung (35a, 35a) enthält, um die entsprechende Verbindungsformation (52, 53), mit der es während des Zusammenbaus verbunden werden soll, in eine passgenaue Position mit der anderen Verbindungsformation (52, 53) zu führen.

5. Maschine nach einem der vorherigen Ansprüche, **dadurch gekennzeichnet, dass** der erste und zweite Rahmenteil (30, 31), wenn sie miteinander verbunden sind, einen Fahrerhausboden (26), einen Sitz (25) für die Bedienperson, eine Bedienhebelanordnung (24), die wirksam mit der Steuerventilanordnung verbunden ist, und eine Fahrerhausstruktur (15) tragen, wobei die Fahrerhausstruktur (15) einen Rahmen enthält, der Seiten (71) mit wenigstens einer Türöffnung vorsieht, wobei die Seiten (71) durch Seitentafeln verschlossen ist, und ein Fahrerhausdach (72), das mit einem oder mehreren Dachtafeln verschlossen ist.

6. Verfahren zum Zusammenbau einer oberen Rahmenstruktur (14) einer Arbeitsmaschine (10), welche obere Rahmenstruktur (14) im Gebrauch drehbar auf einer unteren, mit dem Boden in Eingriff stehenden Struktur (11) montiert ist, die mit dem Boden in Eingriff stehende Mittel (12) enthält, durch welche die Maschine (10) über den Boden bewegbar ist, wobei das Verfahren das Bereitstellen eines ersten monolithischen Gussrahmenteils (30) und das Bereitstellen eines zweiten monolithischen Gussrahmenteils (31) enthält, wobei das erste und zweite Rahmenteil (30, 31) jeweils entsprechende Verbindungsformationen (35, 36; 52, 53) enthalten, mittels derer das erste und zweite Rahmenteil anschließend miteinander verbunden werden, wobei das Verfahren ferner enthält das Montieren eines Motors (40) auf dem ersten Rahmenteil (30) und das Montieren eines Arbeitsarms (16) am zweiten Rahmenteil (31) derart, dass es dem Arbeitsarm (16) ermöglicht wird, um eine im Allgemeinen aufrechte Achse (A) zu schwingen, und anschließend das Verbinden des ersten und zweiten Rahmenteils (30, 31) unter Verwendung der Verbindungsformationen (35, 36, 52, 53), um die obere Rahmenstruktur (14) bereitzustellen.

7. Verfahren nach Anspruch 6, **dadurch gekennzeichnet, dass** das Verfahren das Montieren und/oder Unterbringen in oder am ersten Rahmenteil (30) wenigstens eines der folgenden Maschinenkomponenten des ersten Rahmenteils vor dem Verbinden des ersten und zweiten Rahmenteils enthält, nämlich:
eine Motorkühlung (42),
eine Hydraulikpumpe,
eine Hydraulikölkühlung (44),
eine Batterie,
einen Kraftstofftank (48),
einen Hydraulikflüssigkeitstank (49).

8. Verfahren nach Anspruch 6 oder Anspruch 7, **dadurch gekennzeichnet, dass** das Verfahren das Montieren und/oder Unterbringen in oder am zweiten Rahmenteil (31) wenigstens eines der folgenden Maschinenkomponenten des zweiten Rahmenteils vor dem Verbinden des ersten und zweiten Rahmenteils enthält, nämlich:
einen Drehkranz und einen Schwenkmotor mittels deren die obere Rahmenstruktur relativ zur unteren, mit dem Boden in Eingriff stehenden Struktur drehbar ist,
eine Hydraulikflüssigkeits-Steuerventilanordnung mittels derer eine Bedienperson im Gebrauch die Maschine steuern kann,
einen Hydrauliklinearantrieb, der bei montiertem Arbeitsarm zum Schwingen des Arbeitsarms um eine allgemein aufrechte Achse relativ zur oberen Rahmenstruktur betriebsfähig ist.

9. Verfahren nach einem der Ansprüche 6 bis 8, **dadurch gekennzeichnet, dass** das Verfahren das Verbinden des ersten und zweiten Rahmenteils (30, 31) durch Bereitstellen von Öffnungen in den jeweiligen Verbindungsformationen (35, 36; 52, 53), Ausrichten der Öffnungen des ersten Rahmenteils (30) mit Öffnungen des zweiten Rahmenteils (31) und Einsetzen von Verbindungselementen in die ausgerichteten Öffnungen und anschließend zum miteinander Verbinden des ersten und zweiten Rahmenteils (30, 31) das Bereitstellen für die obere Rahmenstruktur (14) eines Fahrerhausbodens (26), eines Sitzes (25) für die Bedienperson, einer Bedienhebelanordnung (24), die wirksam mit der Steuerventilanordnung verbunden ist, und einer Fahrerhausstruktur (15) enthält, wobei die Fahrerhausstruktur (15) einen Rahmen enthält, der Seiten (71) mit wenigstens einer Türöffnung vorsieht, wobei die Seiten (71) durch Seitentafeln verschließbar ist, und ein Fahrerhausdach (72), das mit einem oder mehreren Dachtafeln verschließbar ist.

10. Verfahren nach einem der Ansprüche 6 bis 9, **dadurch gekennzeichnet, dass** das Verfahren das Herstellen von hydraulischen und elektrischen Verbindungen zwischen Maschinenkomponenten des ersten und zweiten Rahmenteils (30, 31) beim oder nach dem Verbinden des ersten und zweiten Rahmenteils (30, 31).

## Revendications

1. Machine de travail (10) comprenant une structure de bâti supérieure (14) qui est montée rotative sur une structure de bâti inférieure (11) qui est en contact avec le sol et qui comprend des moyens (12) qui sont en contact avec le sol et à l'aide desquels la machine (10) est mobile sur le sol, la structure de bâti supérieure (14) comprenant un premier et un second élément de bâti moulé de façon monolithique (30, 31) chacun servant au montage de composants de machine (40, 42, 48, 49), le premier et le second élément de bâti (30, 31) comprenant des formations d'accouplement (35, 36 ; 52, 53) respectives, au moyen desquelles le premier et le second élément de bâti (30, 31) sont accouplés, **caractérisée en ce que** la machine de travail (10) comprend un moteur (40) qui est monté et/ou logé dans ou sur le premier élément de bâti (30), et le second élément de bâti (31) fournit un support de montage (51) pour un bras de travail (16) permettant à celui-ci de basculer autour d'un axe (A) généralement vertical.

2. Machine suivant la revendication 1, **caractérisée en ce que** le premier élément de bâti (30) comprend une partie arrière (34) et une paire de parties latérales opposées s'étendant vers l'avant (35, 36), la partie arrière (34) ayant une masse telle qu'elle sert de contrepoids, alors que les parties latérales (35, 36) fournissent chacune une formation d'accouplement respective.

3. Machine suivant la revendication 1 ou 2, **caractérisée en ce que** le second élément de bâti (31) comprend une partie avant (50) et une paire de parties latérales s'étendant vers l'arrière (52, 53), la partie avant (50) fournissant le support de montage (51) pour le bras de travail (16), alors que les parties latérales (52, 53) fournissent respectivement une formation d'accouplement qui coopère avec une formation d'accouplement (35, 36) d'une partie latérale s'étendant vers l'avant (35, 36) du premier élément de bâti (30).

4. Machine suivant une quelconque des revendications précédentes, **caractérisée en ce qu'**une des formations d'accouplement (35, 36) du premier ou du second élément de bâti (30) comprend un dispositif de guidage (35a, 35a) pour guider la formation d'accouplement respective (52, 53), à laquelle il doit être accouplé, dans une position de registre avec l'autre formation d'accouplement (52, 53) au cours de l'assemblage.

5. Machine suivant une quelconque des revendications précédentes, **caractérisée en ce que** le premier et le second élément de bâti (30, 31), lorsqu'ils sont accouplés, montent un sol de cabine (26), un siège d'opérateur (25), un levier de commande complet (24) qui est relié de façon opérationnelle à un ensemble de soupapes, et une structure de cabine (15), la structure de cabine (15) comprenant des côtés fournissant un bâti (71) avec au moins une ouverture de porte, les côtés (71) étant fermés par des panneaux latéraux, un toit de cabine (72) qui est fermé avec une ou plusieurs plaques de toiture.

6. Procédé d'assemblage d'une structure de bâti supérieure (14) d'une machine de travail (10), la structure de bâti supérieure (14) étant, en service, montée rotative sur une structure inférieure qui est en contact avec le sol (11) et qui comprend des moyens qui sont en contact avec le sol (12) et à l'aide desquels la machine (10) est mobile sur le sol, le procédé comprenant la fourniture d'un premier élément de bâti coulé de façon monolithique (30), ainsi que d'un second élément de bâti coulé de façon monolithique (31), le premier et le second élément de bâti (30, 31) comprenant chacun des formations d'accouplement respectives (35, 36; 52, 53), au moyen desquelles le premier et le second élément de bâti sont, par la suite, accouplés, le procédé comprenant, en plus, le montage d'un moteur 40 sur le premier élément de bâti (30), ainsi que d'un bras de travail (16) sur le second élément de bâti (31) de manière que le bras de travail (16) puisse basculer autour d'un axe généralement vertical (A) et, ensuite, l'accouplement du premier et du second élément de bâti (30, 31) en utilisant les formations d'accouplement (32, 36 ; 52, 53) afin de fournir la structure de bâti supérieure (14).

7. Procédé suivant la revendication 6, **caractérisé en ce que** le procédé comprend le montage et/ou le logement dans ou sur le premier élément de bâti (30) d'au moins une parmi les pièces suivantes, prévues sur le premier élément de bâti, préalablement à l'accouplement du premier et du second élément de bâti, à savoir:
un pack de refroidissement de moteur (42),
une pompe hydraulique,
un pack de refroidissement d'huile hydraulique (44),
une batterie,
un réservoir de gasoil (48),
un réservoir de liquide hydraulique (49).

8. Procédé suivant la revendication 6 ou 7, **caractérisé en ce qu'**il comprend le montage et/ou le logement dans ou sur le second élément de bâti (31) d'au moins une parmi les pièces suivantes, prévues sur le second élément de bâti, préalablement à l'accouplement du premier et du second élément de bâti, à savoir :
une couronne de rotation et un moteur de rotation, au moyen desquels la structure de bâti supérieure peut tourner par rapport à la structure inférieure en contact avec le sol,
un ensemble de soupapes de commande du fluide hydraulique, au moyen duquel un opérateur peut commander la machine en service ;
un actionneur linéaire hydraulique qui est opérationnel, lorsque le bras de travail est monté, pour basculer celui-ci autour d'un axe généralement vertical par rapport à la structure de bâti supérieure.

9. Procédé suivant une quelconque des revendications 6 à 8, **caractérisé en ce qu'**il comprend l'accouplement du premier et du second élément de bâti (30, 31) en prévoyant des ouvertures dans les formations d'accouplement respectives (35, 36 ; 52, 53), en alignant les ouvertures du premier élément de bâti (30) sur les ouvertures du second élément de bâti (31) et en insérant des éléments de fixation dans les ouvertures alignées, puis, en fournissant à la structure de bâti supérieure (14), à la suite de l'accouplement du premier et du second élément de bâti (30, 31), un sol de cabine (26), un siège d'opérateur (25), un levier de commande complet (24) qui est relié de façon opérationnelle à l'ensemble de soupapes de commande, et une structure de cabine (15), qui comprend des côtés (71) fournissant un bâti avec au moins une ouverture de porte, les côtés (71) pouvant être fermés avec des panneaux latéraux, et un toit de cabine (72) pouvant être fermé avec une ou plusieurs plaques de toit.

10. Procédé suivant une quelconque des revendications 6 à 9, **caractérisé en ce qu'**il comprend la réalisation de connexions hydrauliques et électriques entre les composants de machine du premier et du second élément de bâti (30, 31) lors ou à la suite de l'accouplement du premier et du second élément de bâti (30, 31).
